# EUROPEAN PATENT SPECIFICATION

(11) **EP 3 641 911 B1**
(45) Date of publication and mention of the grant of the patent: **02.04.2025**
(21) Application number: 18821061.1
(22) Date of filing: 20.06.2018
(51) Int. Cl.: B01D 46/52, B01D 29/62, B28D 7/02

(54) **ROTATABLE FILTER SYSTEM**
DREHBARES FILTERSYSTEM
SYSTÈME DE FILTRE ROTATIF

(30) Priority: 20.06.2017 US 201715628581
(43) Date of publication of application: 29.04.2020
(73) Proprietor: JPL Global, LLC, Moreno Valley, CA 92552 (US)
(72) Inventor: FAIRWEATHER, Mitch, Moreno Valley CA 92552 (US); CURTIS, Stephen, M., Moreno Valley CA 92552 (US); GUTH, Paul, W., Menifee CA 92584 (US); OTT, Randy, Moreno Valley CA 92552 (US)
(74) Representative: Purdylucey Intellectual Property
(86) International application number: PCT/US2018/038617
(87) International publication number: WO 2018/237085

(56) References cited:
- EP-A2- 0 793 988
- DE-A1- 19 514 068
- RU-C1- 2 096 067
- US-A- 2 407 046
- US-A- 3 089 167
- US-A- 3 808 750
- US-A- 4 838 901
- US-A- 6 159 261
- US-A1- 2010 116 261

## Description

### BACKGROUND OF THE INVENTION

### Field of the Invention

The present disclosure pertains generally to power masonry tools and related devices for cutting and grinding. More specifically, the present disclosure relates to power saws of the "cutoff" type and systems that further maximize containment of dust contaminant while cutting cinder block, concrete, brick, clay, stone, tile and the like.

### Description of the Prior Art

Power saws of the "cut-off" variety have been known for some time that employ a rotating circular blade applied to a stationary workpiece, such as wood, masonry or stone materials. An early version of a radial saw was invented by Raymond De Walt in 1922. These types of saws further include what is known as a "chop saw" which may be used for cutting lengths of pipe, steel, and other masonry objects. The chop saw comprises a motor coupled to a circular blade (or grinding wheel) pivotally supported for manual arcuate movement relative to a supporting surface such as a worktable.

An example of systems and methods comprising a chop saw are disclosed in U.S. Pat. No. 7,543,522 entitled "Adjustable Fence Assembly for Chop Saw," to Chen. Some additional features known for chop saws include compounding the blade to change its angle with respect to the horizontal plane; or a sliding compound feature so that the blade can make larger cuts relative to a circular blade diameter. Some chop saws further employ a laser guide such as the configuration disclosed in U.S. Pat. No. 4,257,297 entitled "Circular Saw with Visual Cut Line Indicator," to Nidbella.

Also known, is a problem of uncontrolled release of and exposure to airborne dust and particulate matter resulting from cutting a workpiece. Accordingly, government agencies such as the Occupational Safety and Health Administration (OSHA) have promulgated safety and health requirements for wet and dry cutting. The California Occupational Safety and Health Act of 1973 (Cal/OSHA) requires employers to provide a safe and healthful work place and gives Cal/OSHA regulatory jurisdiction over all public and private employers in California. Henceforth, employers must be compliant with all regulations set forth in Title 8 of The California Code of Regulations. In addition to health issues, the dust by-products present a clean-up challenge, even if all individuals in a contained environment have donned respirators.

Development of wet cutting devices and methods is one solution to dust abatement. In doing so, water is applied at a blade cutting edge where dust is entrained to a fluid and directed to a holding area. While most wet cutting methods work relatively well, they create additional problems of waste water pollution and environmental concerns. Further, the slurry created will adhere to cutting tool materials and components that also require periodic cleaning.

Many prior art solutions have been proposed that specifically employ dry means to control dust. Examples of such designs include, "Cutting And Dust Collecting Assembly," by Johansson, U. S. Pat. App. Pub. No. 2008/0163492, "Cutting Apparatus with Dust Discharging," to Kodani et al., U. S. Pat. No. 7,223,161, "Dust-Free Masonry Cutting Tool," to Bath, U. S. Pat. No. 6,595,196, "Dust Collector for A Power Tool," by Miller et al., U. S. Pat. Pub. No. 2007/0017191, to name a few. Such solutions generally may be suitable for their general purposes however none of these solutions are applicable for a chop saw. Yet another similar device was proposed by one of the present inventors, Guth entitled "Dust Collection System for A Masonry Saw," U. S. Pat. No. 7,013,884, and assigned to Masonry Technology Incorporated. This dust abatement design is applicable to a masonry chop saw; however this design is not easily portable and requires a separate hook up to a vacuum system.

In light of the above, it is an object of the present invention to provide a Chop Saw with Dust Collection that is highly portable and lighter in weight as compared prior art solutions. More specifically, it is an object of the present invention to provide a masonry chop saw that integrates dust collection to a single portable unit. It is still a further object of the present invention to provide a dry dust collection design that is easily cleaned. It is still further an object of the present invention to provide a design that includes a variety of innovative features over prior designs. US Patent Publication No. US 2010/0116261 describes a chop saw with dust collection system. DE Patent Publication No. DE 19514068 describes a gas filter which comprises fan-fold panels. US Patent Publication No. 4,838,901 describes a lightweight filter.

### BRIEF SUMMARY OF THE INVENTION

The invention is defined in claim 1, preferred embodiments are defined in dependent claims 2-7. The present invention specifically addresses and alleviates the above mentioned deficiencies, more specifically, the present disclosure in a first aspect, refers to a cut off saw comprising: a worktable for supporting a work piece; a rotatable arm fixed to a circular saw blade and pivotably secured to the worktable; a center slot carved out of the worktable axially aligned to the circular saw blade; a vacuum apparatus at an interior of the worktable, the vacuum apparatus providing negative pressure with respect to atmosphere at the center slot and collecting dust from the work piece created as a byproduct from use of the cut off saw.

This example is additionally characterized in that worktable further comprises: a saw motor mechanically coupled to a circular saw blade; an upper housing; and a lower dust bin connected below the upper housing, the upper housing and lower dust bin each including a front panel, a back panel and first and second lateral sides, wherein the upper housing further comprises a lateral partitioning wall extending from first and second later sides, the lateral partitioning wall defining a suction chamber below the center slot, and wherein the upper housing further comprises a transverse partitioning wall defining both a vacuum motor chamber and a tilter chamber.

This example is additionally characterized wherein each of the upper housing front panel and upper housing back panel further comprises a lifting handle, each of the lifting handles comprising an indentation in the upper housing front and back panels. In addition to the center slot, the worktable further comprises a plurality of blade slots angularly aligned to the center slot.

The cut off saw is further characterized wherein the filter chamber comprises: an access panel covering an area carved out of the first lateral side; a filter cleaning knob connected to a first filter end cap via a connection bolt, the connection bolt penetrating a hole in the access panel; a panel bushing providing translational and rotational support to the connection bolt; a second filter end cap, the first and second filter end caps together securing ends of a cylindrical media tilter; a vacuum suction tube connected to the vacuum apparatus, the vacuum tube penetrating the transverse partitioning wall; and an annular rim protrusion extending from the vacuum suction tube, the annular rim protrusion mating with the second filter end cap via a gasket and a bearing, the second filter end cap further comprising a bearing seat acting as an abutment to the bearing.

Still further, the example is characterized wherein the upper housing comprises a lower rim, the lower rim comprising a groove around a perimeter thereof, and wherein the lower dust bin further comprises an upper rim, the upper rim comprising a groove around a perimeter thereof, and wherein the upper and lower rims comprising grooves are matingly and removably connected to each other.

Yet further, the example is characterized wherein the lower dust bin first and second lateral sides each comprise a lifting handle, the lifting handles each comprising an indentation in the first and second lateral sides, respectively; and wherein the lower dust bin further comprises a latch for securing the lower dust bin to the upper housing.

In a second aspect, an example is a cut off saw comprising: a worktable for supporting a work piece; a saw motor mechanically coupled to a circular saw blade; a rotatable arm fixed to the circular saw blade and pivotably secured to the worktable; a filter chamber at an interior to the worktable, the filter chamber comprising: a cylindrical media filter; and a vacuum tube coupled to an interior of the cylindrical media filter providing negative pressure with respect to atmosphere to said interior of the cylindrical media filter.

The cut off saw in this example may be further characterized in that the worktable further comprises: a center slot carved out of the worktable axially aligned to the circular saw blade; and a plurality of blade slots angularly aligned to the center slot. Further, the filter chamber further comprises a filter cleaning flap secured to a lateral partitioning wall at an interior of the filter chamber, the cylindrical filter media having a plurality pleated segments about a cylindrical surface, wherein the filter cleaning flap contacts the pleated segments when the filter cleaning knob is rotated. Also, the filter chamber further comprises: an access panel covering an area carved out of the first lateral side; and a filter cleaning knob connected to a first filter end cap via a connection bolt, the connection bolt penetrating a hole in the access panel. Still further, the filter chamber further comprises: a panel bushing providing translational and rotational support to the connection bolt; and a second filter end cap, the first and second filter end caps together securing ends of a cylindrical media filter. Yet still further, the filter chamber further comprises: a vacuum suction tube connected to the vacuum apparatus, the vacuum tube penetrating the transverse partitioning wall; and an annular rim protrusion extending from the vacuum suction tube, the annular rim protrusion mating with the second filter end cap via a gasket and a bearing, the second filter end cap further comprising a bearing seat acting as an abutment to the bearing. To facilitate portability of the cut off saw, the invention additionally comprises two or more wheels.

In a third aspect, an example may comprise a method for cutting masonry objects comprising the steps of: mounting a circular saw blade pivotably with respect to a worktable; carving out a center slot in the worktable aligned to the circular saw blade; aligning a plurality of side slots at an angle to the center slot; imparting a negative pressure with respect to atmosphere to an interior of the worktable; and collecting dust through the center slot and the side slots from the work piece created as a byproduct from use of the circular saw blade.

The method herein may be additionally characterized as comprising: providing start-lip current to a first motor; providing start-up current to a second motor start-lip current to a first motor; providing start-up current to a second motor sequentially to minimize undesirable current surges; providing a cylindrical filter below the worktable; and filtering the dust from air passing through the cylindrical filter. The method additionally comprises pleating the cylindrical filter thereby increasing usable surface area of the cylindrical filter.

Still further, the method for cutting masonry objects herein may be characterized as comprising: contacting a filter cleaning flap to the cylindrical filter; rotating a filter cleaning knob; clearing dust from the cylindrical filter; and collecting dust in a dust bin located at an area below the worktable. Also the method includes connecting a vacuum tube to a center area of the cylindrical filter; imparting a negative pressure with respect to atmosphere to a center area of the cylindrical filter; and exhausting filtered air to a lateral side of the worktable. Another method step includes providing a plurality of lifting handles at lateral sides of the worktable.

In yet another aspect of the disclosure, an apparatus comprising a cylindrical filter, a filter cleaning knob, and a filter cleaning flap is disclosed. Within such embodiment, the filter cleaning knob is configured to rotate the cylindrical filter. The filter cleaning flap is coupled to the cylindrical filter and configured to sequentially make contact with a plurality of pleated segments of the cylindrical filter as the filter cleaning knob is rotated.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Fig. 1 is a perspective view of a preferred chop saw;
Fig. 2 is a rear perspective view of a the example illustrated in Fig. 1;
Fig. 3 is cross-sectional view of the example as taken along line 3-3 in Fig. 1;
Fig. 4 is a cross-sectional view of the example as taken along line 4-4 in Fig. 1;
Fig. 5A is close up cut-away view of the perspective illustration shown in Fig. 1;
Fig. 5B is an end view of a filter cleaning knob of the present invention;
Fig. 6 is a schematical illustration of a cylindrical filter configuration; and
Fig. 7A and Fig. 7B illustrate how an upper housing and a lower dust bin relate to one another.
Fig. 8 illustrates a cylindrical filter in accordance with an aspect of the disclosure.
Fig. 9 illustrates an exploded view of the cylindrical filter illustrated in Fig. 8.

### DETAILED DESCRIPTION OF THE PREFERRED EMBODIMENTS

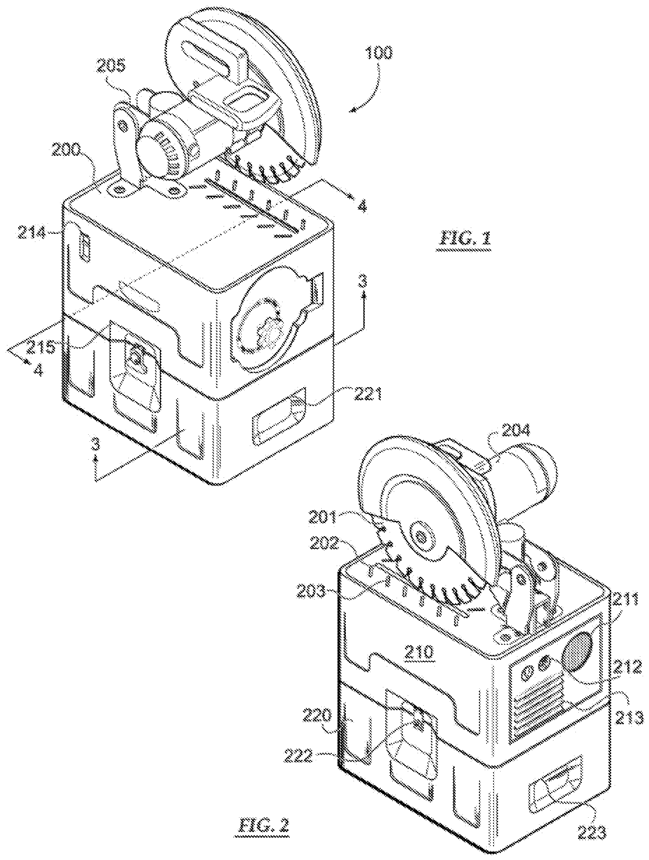

Referring initially to Fig. 1, an example 100 comprises a cut-off type saw which is configured to cut masonry, and more specifically stones, bricks, pavers, and other masonry items. It should be understood that inventive concepts herein can also apply to woodworking circular saws and additionally saws for cutting plastic and roofing. The dust collection system 100 works in connection with a specifically configured saw 201, with a unique cutting table 200 and dust collector arrangement. The saw may be a cut-off saw or a chop saw, which has a circular toothed blade 201 or grinding wheel, and which rotates in a vertical plane of rotation as shown. The cut-off saw is further mounted on a pivotable arm 205 which allows the saw to be raised and lowered from a non-cutting position onto a cutting position so that the blade contacts a masonry work piece 420, and is lowered through the work piece 420 as the saw blade cuts.

In the Fig. 1 example saw 201 is shown coupled to a saw motor 204. It should be further appreciated that a similar circular saw could be coupled to a belt or pulley system for driving the saw 201. Still further, saw 201 is provided with a cutting table 200 which includes a blade center slot 202. As the cutting blade passes through the work piece, the blade continues until it enters the center slot 202; and additionally passes through the surface of the cutting table 200 into the slot 202. Cutting table 200 should be broadly construed as a substantially flat structure supporting a workpiece.

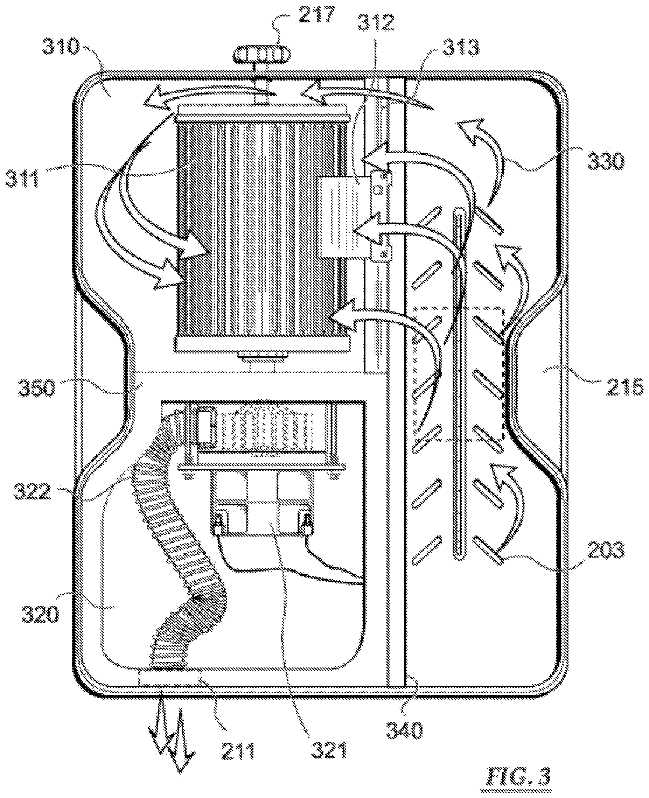

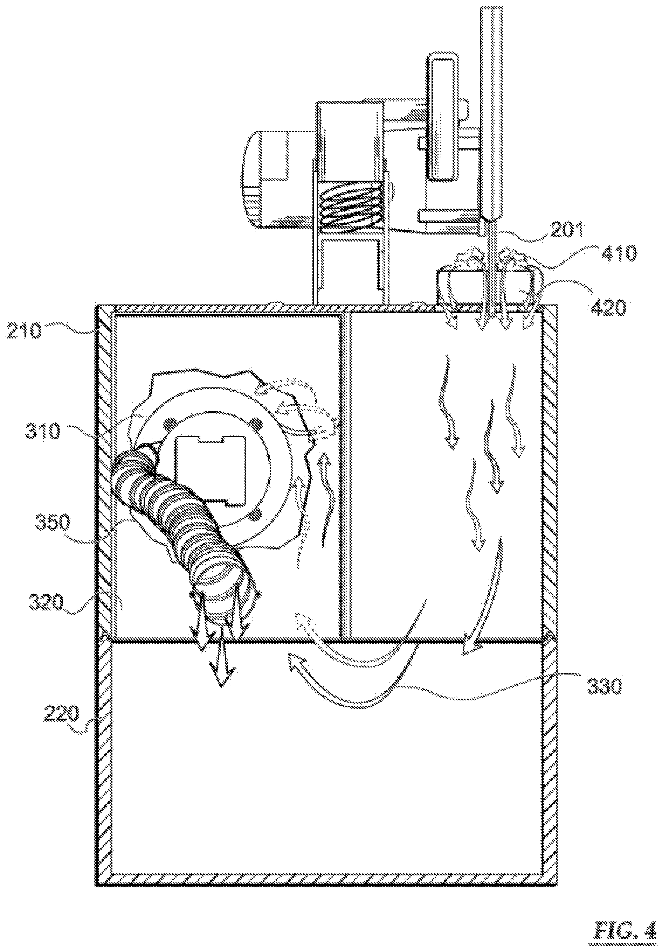

As circular blade 201 teeth engage the work piece 420 (Fig. 4), dust and particulate matter 410 are ejected from the work piece in various directions. A negative pressure provided by vacuum apparatus 321 (Fig. 3) causes air to flow in a downward direction thereby curtailing outward dispersion of the dust and particulate matter 410. In conventional prior art systems, the saw blade 201 would not pass through a blade slot, and thus ejected material would strike the cutting table and be collected after striking the cutting table. In the saw and dust collection system 100 of the present invention, a powerful flow of air is directed past the cutting blade 201, through center slot 202 and angled side slots 203 and into a filter chamber 310 below the cutting table 200. Also importantly, a flow of air is provided to remove dust at the instant the workpiece 420 is contacted by the saw blade 20] and throughout the cutting thereof.

With reference to Fig. 2, a rear perspective view of the example is shown. Exhaust port 211 is provided for discharge of filtered air 330. Air vents 213 provide for ventilation and heat transfer from vacuum apparatus 321. Lifting handles 221, 223 are further provided on first and second lateral sides to assist portability of the unit 100. Electrical connections 212 allow for external power to be supplied to the device 100 as shown.

In a preferred example system 100 additionally comprises two motors 204, 321; a first 204 that drives the saw blade 201 and a second 321 that provides a prime mover for air flow. The saw and collection system 100 of the present invention may will reduce a likelihood that the system 100 current surge causes a circuit breaker to be tripped. It is to be noted that although saw has been mentioned in the main part of the description herein, it is not being mentioned in the claims, and therefore, is not part of the invention.

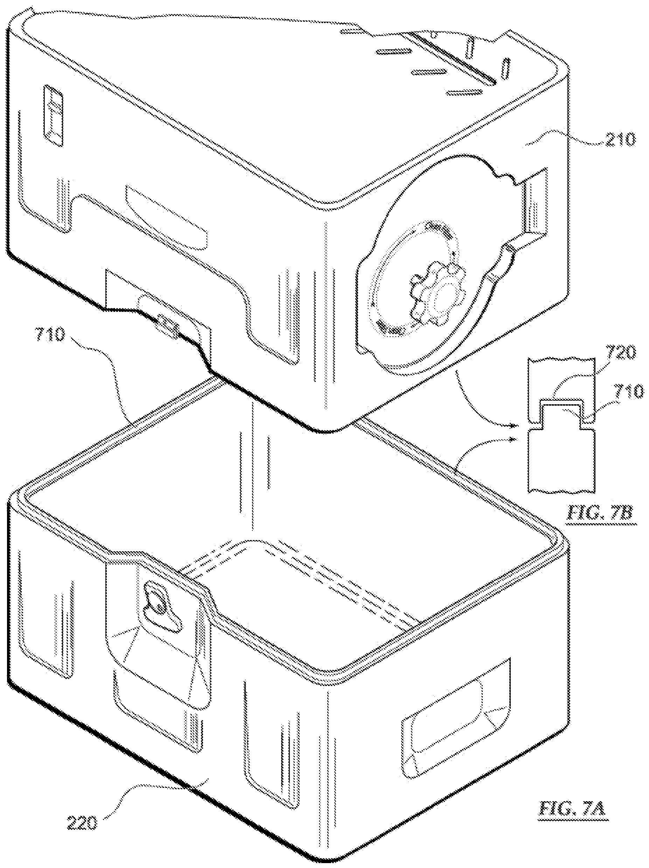

Also as shown in Fig. 1 and in Fig. 2, the worktable 200 has two separable units, namely upper housing 210 and lower dust bin 220. In addition to lifting handles 221, 223 on lateral sides, lifting handles 215 are provided on a front and a back of the unit 100 to also serve as hand holds for a user transporting the device. Latch 222 is provided to secure upper housing 210 to lower dust bin 220 also as shown in Fig. 7A and Fig. 7B.

With reference to Fig. 3, a sectional view taken along line 3-3 in Fig. 1 is shown. Particulate matter 410 from workpiece 420 is drawn through center slot 202 and angled side slot 203. It should also be appreciated that side slot could be aligned parallel to the center slot 202 and at right angles thereto. Air containing dust 410 flows as shown by directional arrows 330 around partitioning wall 340. Dust 410 is fm1her filtered from the air through cylindrical pleated filter 311. Some of the dust and particulate matter will fall to dust bin 220 and some will be trapped by the filter. Filter cleaning flap 312 is provided connected to a ledge 313 adjacent to partitioning wall 340. The cleaning flap 312 will assist in clearing the cylindrical filter 311 when a user rotates knob 217. Translational wall 350 serves to separate filter chamber 310 from vacuum chamber 320. Exhaust hose 322 is shown in the vacuum chamber 320 for exhausting air to an exterior of the device 100. The vacuum apparatus 321 may use various types of motors to generate negative pressure and CFM to include blower motor, centrifugal fan, squirrel cage fan, propeller fan, or any other conventional moving device.

Fig 4 similarly shows the flow of air with directional arrows 330 as a sectional view along line 4-4 of Fig 1. A cutaway in translational wall 350 reveals filter compartment 310. It will be appreciated that other configurations for filter chamber 310 and vacuum chamber 320 could be well within the scope of the present invention, such as, for example the filter chamber 310 configured directly below slots 202, 203.

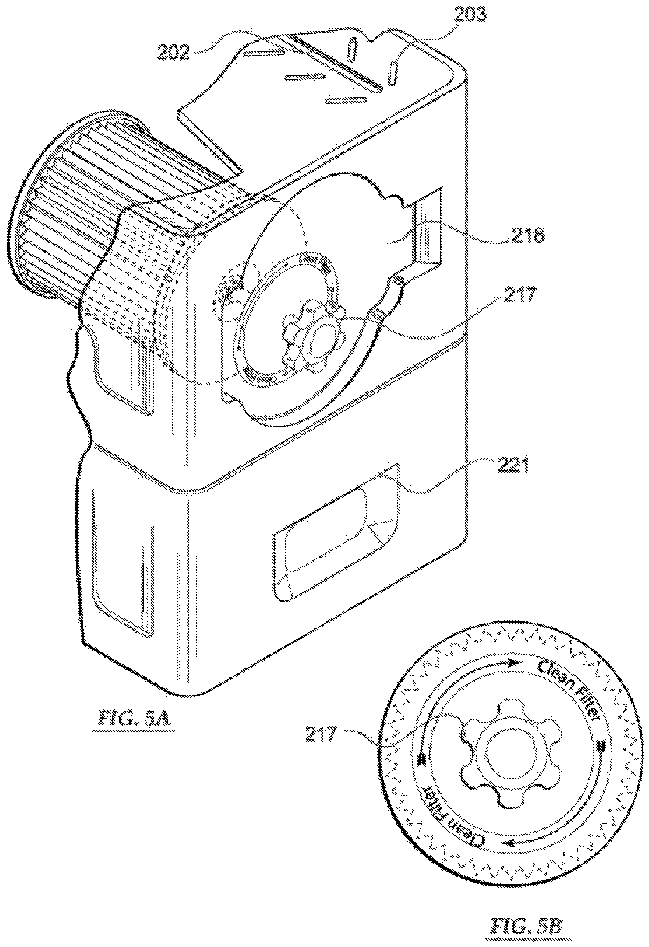

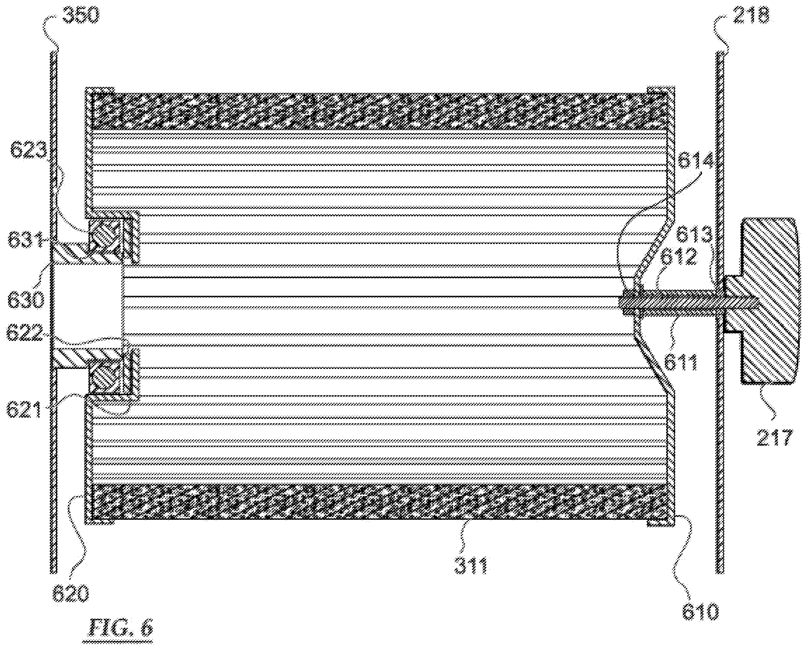

Fig. 5A shows a closer view of the embodiment 100 in the Fig. 1 illustration. The cut-a-way view also reveals a perspective illustration of the pleated cylindrical filter 311. A carve out in a lateral side of upper housing 210 is provided to accommodate access panel 218. Filter cleaning knob 217 is connected to the cylindrical filter 311 through the access panel 218 as further illustrated in Fig. 6. Access panel 218 can further be removed for maintenance and disassembly of the cylindrical filter 311 for replacement or deep cleaning. Fig. 5 shows an end view of filter cleaning knob 217.

Fig. 6 illustrates more specifically how a cylindrical filter 311 connects to a vacuum apparatus 321 via vacuum tube 630 penetrating transverse wall 350. Initially, filter 311 is supported on it is sides by filter end caps 610, 620. Knob 217 connects to the first end cap 610 via coupler spacing 611 and connection bolt 612. Panel bushing 613 provides translational and rotational support to connection bolt 612. Hexagonal nut 614 secures the first filter end cap 610. At the other end, vacuum tube 630 has an annular rim 631 protruding therefrom and provides an abutment for bearing 623 also supported by gasket 622. Recess 621 in the second filter end cap 620 provides the space to connect bearing 623 around rim 631 as shown. However, it is to be noted that the embodiment shown in FIG.6 does not form part of the invention, and is not covered by the claims.

Fig. 7A and Fig. 7B provide a more detailed view of how upper housing 210 connects to lower dust bin 220. Rim 710 mates with groove 720 as shown for a secure connection upon closure of latch 222. An inside of the dust bin 220 shows an area where dust ultimately settles for later removal.

**In** another aspect of the disclosure, particular configurations of the aforementioned cylindrical filter 311 are contemplated. To this end, it should be noted that conventional air filters are inherently problematic because during their use they become saturated with dust and debris which at some point significantly reduces airflow. As previously disclosed herein, a filter pleat agitator mechanism (e.g., flap 312) may be included to periodically clean the aforementioned cylindrical filters in place by rotating these filters against the filter pleat agitator mechanism which would dislodge dust/debris and thus increase filter efficiency.

This rotational cleaning method, however, creates the problem of sealing the cylindrical filter to the intake port while still allowing it to rotate. In addition, it would be desirable for this rotating filter/seal to endure in an extreme environment of high temperature, high vibration, and micro fine dust. It would be further desirable that the seal material is chosen such that it does not damage the intake port during the rotation process or from the high vibration environment.

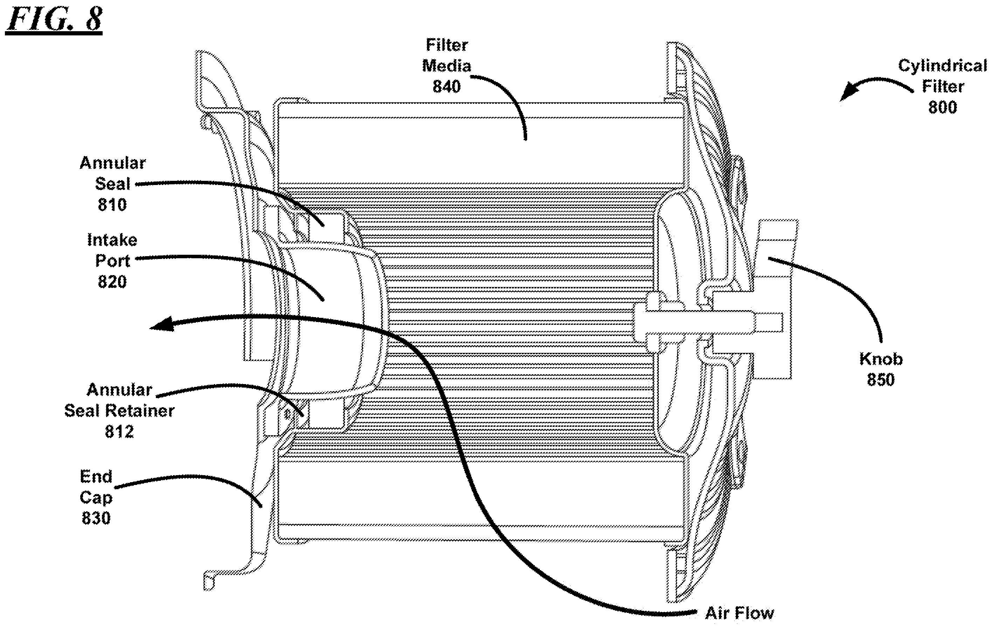

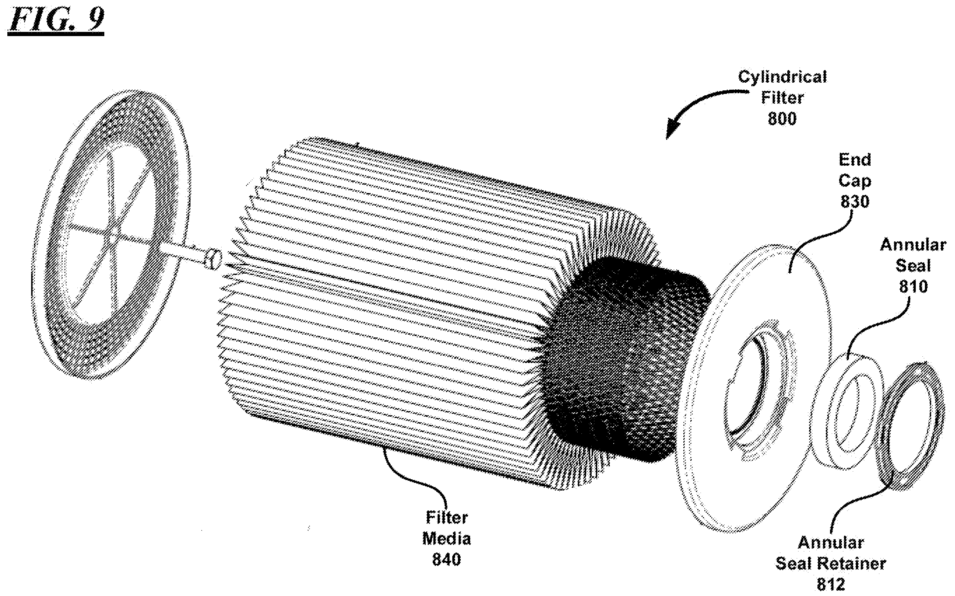

Referring next to Figs. 8-9, an exemplary cylindrical filter with a seal configured for such extreme environments is provided in accordance with an aspect of the disclosure. As illustrated in Fig. 8, cylindrical filter 800 comprises an intake port 820, wherein intake port 820 may be configured to facilitate the illustrated air flow via a vacuum suction tube (e.g., vacuum suction tube 630) coupled to a vacuum device. It is also contemplated that cylindrical filter 800 further includes annular seal 810, wherein annular seal 810 is firmly embedded within end cap 830 by annular seal retainer 812.

Here, it should be appreciated that cylindrical filter 800 illustrated in Figs. 8-9 is substantially similar to the aforementioned cylindrical filter 311, wherein the structure and functionality of cylindrical filter 800 is substantially similar to cylindrical filter 311. For instance, similar to cylindrical filter 311, it is contemplated that cylindrical filter 800 is configured to rotate against a filter pleat agitator mechanism (e.g., flap 312) for the purpose of cleaning dust and debris from the filter pleats of filter media 840 to increase filter efficiency. It is further contemplated that gasket 622 illustrated in Fig. 6, may be substantially similar to annular seal 810, wherein annular seal 810 is made of material configured to maintain a vacuum tight seal and allow for rotation of cylindrical filter 800 in an extreme environment of high heat, high vibration, and micro fine dust. Moreover, it would be desirable to manufacture annular seal 810 from a substance that most mitigates the damaging effects to the intake port 820 of cylindrical filter 800 during rotation and/or within a high temperature/vibration environment.

In a particular aspect, it contemplated that annular seal 810 is made of a spongy foam-like material. For instance, annular seal 810 may be made of silicone foam. Indeed, as is well known, silicone foam has a wide operating temperature (e.g., temperature range of -67°F to 392°F (-55°C to 200°C)), and provides excellent dust sealing capabilities (e.g., it is well known that open cell and closed cell silicone foam products can be used for sealing out dust with low compressive forces). As is also generally known, silicone foam products are typically manufactured from platinum cured, liquid silicone rubber. The raw compound is expanded and dispensed on a continuous casting line, then heat cured. The expansion process is controlled to create a range of products having different densities, softness/firmness and cell structures. Open cell silicone foams are widely used for cushioning, dust sealing or light water sealing. Closed cell silicone foam materials are used for outdoor gaskets, wash-down gaskets and resilient cushioning pads. Expanded silicone foam products have a firmness range from ultra soft to extra firm, allowing engineers to select the best product for their application.

During use, it is thus contemplated that cylindrical filter 800 yields various desirable aspects. For instance, it is contemplated that cylindrical filter 800 may be configured to rotate via knob 850 such that cylindrical filter 800 rotates against a filter pleat agitator mechanism (e.g., flap 312) for the purpose of cleaning the filter pleats filter media 840, and thus optimizing airflow. The material of annular seal 810 may also be particularly selected (e.g., silicone foam) so as to maintain a vacuum tight seal and allow for rotation in an extreme environment of high heat, high vibration, and micro fine dust, while being soft enough so as to not damage intake port 820. Namely, it is contemplated that annular seal 810 may be configured to function as a diaphragm between cylindrical filter 800 and intake port 820 to isolate vibration during use, and thus eliminating premature damage to intake port 820.

## Claims

1. An apparatus comprising: a cylindrical filter (800); and a filter cleaning knob (850) configured to rotate the cylindrical filter (800); a filter cleaning flap (312) coupled to the cylindrical filter (800) and configured to sequentially make contact with a plurality of pleated segments (840) of the cylindrical filter (800) as the filter cleaning knob (850) is rotated to facilitate dislodging dust and debris trapped by the cylindrical filter (800); and **characterized in that** the apparatus further comprises: an annular seal (810) encircling an intake port (820) of and configured to function as a diaphragm between the cylindrical filter (800) and the intake port (820), wherein the annular seal (810) is manufactured from silicon foam material to mitigate damage to the intake port (820) from a rotation of the cylindrical filter (800) and from vibrations.

2. The apparatus of claim 1, further comprising: a connection bolt configured to connect the filter cleaning knob (850) to a first filter end cap, wherein the connection bolt penetrates a hole in an access panel; a panel bushing configured to provide translational and rotational support to the connection bolt; and a second filter end cap (830), wherein the first filter end cap and the second filter end cap (830) are respectively configured to secure opposite ends of the cylindrical filter (800).

3. The apparatus of claim 2, wherein the annular seal (810) is embedded within the second filter end cap (830) by an annular seal retainer (812).

4. The apparatus of claim 1, wherein the apparatus further comprises: a housing comprising an upper housing portion and a lower housing portion, wherein the upper housing portion is configured to house the filter (800), and wherein the lower housing portion is configured to house a dust collection bin, the dust collection bin configured to receive dust removed from the plurality of pleated segments of the cylindrical filter (800) by the filter cleaning flap (312) as the filter cleaning knob (850) is rotated.

5. The apparatus of claim 1, further comprising a vacuum suction tube configured to connect to a vacuum device on a first end and to the cylindrical filter (800) on a second end to facilitate a coupling of the cylindrical filter (800) and the vacuum device.

6. The apparatus of claim 5, wherein the annular seal (810) is configured to provide a seal between the vacuum suction tube and the cylindrical filter (800).

7. The apparatus of claim 1, wherein the annular seal (810) is further configured to provide a thermal break between the intake port (820) and the cylindrical filter (800).

## Patentansprüche

1. Vorrichtung, die Folgendes umfasst: einen zylinderförmigen Filter (800) und einen Filterreinigungsdrehknopf (850), der so ausgelegt ist, dass er den zylinderförmigen Filter (800) dreht, eine Filterreinigungsklappe (312), die mit dem zylinderförmigen Filter (800) gekoppelt und so ausgelegt ist, dass sie nacheinander mit mehreren plissierten Segmenten (840) des zylinderförmigen Filters (800) in Kontakt kommt, wenn der Filterreinigungsdrehknopf (850) gedreht wird um ein Lösen von von dem zylinderförmigen Filter (800) aufgefangenem Staub und Schmutz zu ermöglichen, und **dadurch gekennzeichnet, dass** die Vorrichtung ferner Folgendes umfasst: eine ringförmige Dichtung (810), die eine Ansaugöffnung (820) des zylinderförmigen Filters (800) umgibt und so ausgelegt ist, dass sie zwischen dem zylinderförmigen Filter und der Ansaugöffnung (820) als Membran dient, wobei die ringförmige Dichtung (810) zwecks Minimierens einer Beschädigung der Ansaugöffnung (820) durch ein Rotieren des zylinderförmigen Filters (800) und durch Vibrationen aus Silikonschaummaterial hergestellt ist.

2. Vorrichtung nach Anspruch 1, die ferner Folgendes umfasst: einen Anschlussbolzen, der so ausgelegt ist, dass er den Filterreinigungsdrehknopf (850) mit einer ersten Filterendkappe verbindet, wobei der Anschlussbolzen durch ein Loch in einem Revisionsdeckel hindurch verläuft, eine Deckelbuchse, die so ausgelegt ist, dass der Anschlussbolzen darin translations- und rotationsgelagert ist, und eine zweite Filterendkappe (830), wobei die erste und die zweite Filterendkappe (830) jeweils so ausgelegt sind, dass sie gegenüberliegende Enden des zylinderförmigen Filters (800) fixieren.

3. Vorrichtung nach Anspruch 2, wobei die ringförmige Dichtung (810) über einen ringförmigen Dichtungshalter (812) in die zweite Filterendkappe (830) eingebettet ist.

4. Vorrichtung nach Anspruch 1, wobei die Vorrichtung ferner Folgendes umfasst: ein Gehäuse mit einem oberen und einem unteren Gehäuseteil, wobei der obere Gehäuseteil so ausgelegt ist, dass der Filter (800) darin untergebracht ist, und der untere Gehäuseteil so ausgelegt ist, dass darin ein Staubsammelbehälter untergebracht ist, wobei der Staubsammelbehälter so ausgelegt ist, dass er Staub aufnimmt, der von der Filterreinigungsklappe (312) aus den mehreren plissierten Segmenten des zylinderförmigen Filters (800) entfernt wird, wenn der Filterreinigungsdrehknopf (850) gedreht wird.

5. Vorrichtung nach Anspruch 1, die ferner einen Vakuumsaugschlauch umfasst, der so ausgelegt ist, dass er sich an einem ersten Ende mit einem Vakuumgerät und an einem zweiten Ende mit dem zylinderförmigen Filter (800) verbinden lässt und so ein Koppeln des zylinderförmigen Filters (800) und des Vakuumgeräts ermöglicht.

6. Vorrichtung nach Anspruch 5, wobei die ringförmige Dichtung (810) so ausgelegt ist, dass sie zwischen dem Vakuumsaugschlauch und dem zylinderförmigen Filter (800) für eine Abdichtung sorgt.

7. Vorrichtung nach Anspruch 1, wobei die ringförmige Dichtung (810) ferner so ausgelegt ist, dass sie zwischen der Ansaugöffnung (820) und dem zylinderförmigen Filter (800) für eine thermische Trennung sorgt.

## Revendications

1. Appareil, comportant : un filtre cylindrique (800) ; et un bouton de nettoyage de filtre (850) configuré pour faire tourner le filtre cylindrique (800) ; une lame de nettoyage de filtre (312) accouplée au filtre cylindrique (800) et configurée pour se mettre séquentiellement en contact avec une pluralité de segments plissés (840) du filtre cylindrique (800) au fur et à mesure que le bouton de nettoyage de filtre (850) tourne pour faciliter le retrait de la poussière et des débris piégés par le filtre cylindrique (800) ; et **caractérisé en ce que** l'appareil comporte par ailleurs : un joint annulaire (810) encerclant un orifice d'admission (820) du filtre cylindrique (800) et configuré pour tenir lieu de diaphragme entre le filtre cylindrique et l'orifice d'admission (820), dans lequel le joint annulaire (810) est fabriqué à partir d'un matériau en mousse de silicone pour atténuer les dommages au niveau de l'orifice d'admission (820) sous l'effet d'une rotation du filtre cylindrique (800) et des vibrations.

2. Appareil selon la revendication 1, comportant par ailleurs : un boulon de raccordement configuré pour raccorder le bouton de nettoyage de filtre (850) à un premier capuchon d'extrémité de filtre, dans lequel le boulon de raccordement pénètre dans un trou dans un panneau d'accès ; un manchon de panneau configuré pour fournir un support de translation et de rotation au boulon de raccordement ; et un deuxième capuchon d'extrémité de filtre (830), dans lequel le premier capuchon d'extrémité de filtre et le deuxième capuchon d'extrémité de filtre (830) sont respectivement configurés pour assujettir les extrémités opposées du filtre cylindrique (800).

3. Appareil selon la revendication 2, dans lequel le joint annulaire (810) est noyé dans le deuxième capuchon d'extrémité de filtre (830) par un élément de retenue (812) du joint annulaire.

4. Appareil selon la revendication 1, dans lequel l'appareil comporte par ailleurs : un boîtier comportant une partie supérieure de boîtier et une partie inférieure de boîtier, dans lequel la partie supérieure de boîtier est configurée pour recevoir le filtre (800), et dans lequel la partie inférieure de boîtier est configurée pour recevoir un bac de collecte de poussière, le bac de collecte de poussière étant configuré pour recevoir la poussière retirée de la pluralité de segments plissés du filtre cylindrique (800) par la lame de nettoyage de filtre (312) au fur et à mesure que le bouton de nettoyage de filtre (850) est tourné.

5. Appareil selon la revendication 1, comportant par ailleurs un tube d'aspiration à vide configuré pour se raccorder à un dispositif à vide sur une première extrémité et au filtre cylindrique (800) sur une deuxième extrémité pour faciliter un accouplement du filtre cylindrique (800) et du dispositif à vide.

6. Appareil selon la revendication 5, dans lequel le joint annulaire (810) est configuré à des fins de mise en œuvre d'un joint entre le tube d'aspiration à vide et le filtre cylindrique (800).

7. Appareil selon la revendication 1, dans lequel le joint annulaire (810) est par ailleurs configuré pour fournir une barrière thermique entre l'orifice d'admission (820) et le filtre cylindrique (800).
